# EUROPEAN PATENT APPLICATION

(11) **EP 3 828 516 A1**
(43) Date of publication of application: **02.06.2021**
(21) Application number: 19212120.0
(22) Date of filing: 28.11.2019
(51) Int. Cl.: G01G 9/00, G01F 23/26, G01G 17/04

(54) **MONITORING SYSTEM FOR A FEEDING BOTTLE**

(71) Applicant: Koninklijke Philips N.V., 5656 AG Eindhoven (NL)
(72) Inventor: KLEIJNEN, Mark Peter Paul, 5656 AE Eindhoven (NL); BEZEMER, Rick, 5656 AE Eindhoven (NL); HAMELMANN, Paul Christoph, 5656 AE Eindhoven (NL); BLOM, Antonius Hermanus Maria, 5656 AE Eindhoven (NL); DOODEMAN, Gerardus Johannes Nicolaas, 5656 AE Eindhoven (NL); KRAGT, Rene Dick, 5656 AE Eindhoven (NL); LIPSCH, Job, 5656 AE Eindhoven (NL); STEUNEBRINK, Tim Patrick, 5656 AE Eindhoven (NL); WOUTERS, Cornelis Bernardus Aloysius, 5656 AE Eindhoven (NL)
(74) Representative: Philips Intellectual Property & Standards

(57) **Abstract**

A monitoring system is provided for a feeding bottle. An inductive sensor is used to detect inductance properties of the milk. A milk volume is derived based on these inductance properties.

## Description

### FIELD OF THE INVENTION

This invention relates to feeding bottles and in particular relates to a system for monitoring the milk quantity in the bottle, during feeding or during filling by expression using a breast pump.

### BACKGROUND OF THE INVENTION

It is desirable when bottle feeding a baby to know how well the baby is drinking. It is also desirable to monitor the milk expression when using a breast pump.

It is known to monitor drinking performance and to provide feedback to the parent. One known example is in the form of a sleeve for the baby bottle, which incorporates a load cell, for measuring the weight of the milk contained by the bottle before and after feeding, and thereby to calculate the milk volume consumed by the infant. The sleeve also contains an accelerometer, to give feedback to the parents in respect of the correct bottle angle, as well as for monitoring the drinking behavior of the child by looking at the bottle movements (e.g., to identify drinking bursts and pauses). The system also allows data to be sent to a companion app for analysis and visualization.

Although a load cell at the bottom of a bottle sleeve can accurately measure the weight of the milk contained by the bottle, it has several disadvantages. First, the load cell technique can only be used when the bottle is placed in an upright position on a stable surface, as otherwise the weight measurements are unreliable. Second, the load cell can only measure the weight before and after feeding, and is not able to monitor the milk volume during feeding, while the bottle is held up in the air. Third, the load cell is very sensitive to mechanical damage, as may occur when dropping the sleeve accidently. Lastly, the load cell's sensitivity is not sufficient to detect the first few drops of milk, which is important for optimizing the vacuum pressure profiles of a breast pump.

### SUMMARY OF THE INVENTION

The invention is defined by the claims.

According to examples in accordance with an aspect of the invention, there is provided a monitoring system for a feeding bottle, comprising:
an inductive sensor for detecting inductance properties of the material proximal to the sensor, the inductive sensor comprising an excitation coil for generating a magnetic field in the internal volume of the feeding bottle and a sensing circuit; and
a processor adapted to determine a milk volume within the feeding bottle based on the inductance properties.

This monitoring system makes use of an inductive sensor to monitor liquid in a baby bottle. Since inductive sensing does not rely on gravity, it can be used to perform volume measurements on non-flat surfaces and for moving volumes, at all angles, and even in the air. The orientation of the bottle may however be taken into account when determining a milk volume, as explained below. In this way, real-time monitoring of milk flow rates is possible, for example based on sequential volume measurements over time. This then enables real-time insights to be provided to a parent regarding their baby's drinking behavior, for example to detect when the baby has finished drinking to prevent overfeeding. It may similarly be used during milk expression using a breast pump, for monitoring milk quantities during expression.

Furthermore, inductive sensing can be fully embedded in plastic and does not require physical contact with the milk, and, due to the large probing volume of inductive sensing, the measurements are marginally disturbed by capacitive coupling to a thin milk film layer or foam on the inside of the bottle.

Note that the detected inductance properties do not need to comprise an actual inductance measurement. Instead, these inductance properties are preferably categorized based on the effect of the material on the generated magnetic field. The term "inductance properties" should be understood accordingly.

In a first set of examples, the inductive sensor comprises a resonator circuit, which includes the excitation coil, and wherein the sensing circuit is for detecting changes in the resonance characteristics. The inductance property is thus the degree to which the resonance characteristics are changed, which in turn depends on the magnetic inductance of the material. The coil generates a primary alternating magnetic field and this leads to the induction of eddy currents and a consequent secondary magnetic field in material within the primary magnetic field.

The resonator circuit for example comprises an oscillator circuit. Interaction of the secondary magnetic field with the primary magnetic field leads to changes in the oscillator frequency and damping, which can be used to derive (changes in) the inductive properties of the material around the primary coil. In this way, the system can sense the amount of milk within the primary magnetic field, for example more milk translates into a larger secondary magnetic field, leading to a larger frequency shift and more damping.

The change in resonance characteristics thus may comprise a change in resonant frequency and/or a change in resonance damping.

The system for example comprises a memory, accessible by the processor, which stores a function or a look up table, for converting between the resonance characteristics and the milk volume. Thus, the relationship between the resonance characteristics and milk volume is previously calibrated. This calibration is not a user operation but is hard-coded into the function or look up table.

In another set of examples, the inductive sensor further comprises a sensing coil separate to the excitation coil. Thus, separate excitation and sensing coils may be used. The phase and/or amplitude of the signal induced in the sensing coil may then be used for the volume detection.

The system may further comprise a shield between the excitation coil of the inductive sensor and an outer surface of the system. This prevents interference by capacitive and/or inductive coupling of the hand of the user.

The system may further comprise an accelerometer for measuring the feeding bottle angle, wherein the processor is adapted to compensate for the angle-dependent milk distribution in the bottle.

This enables more accurate determination of the milk volume.

The inductive sensor may comprise a plurality of inductive sensing elements. The use of multiple sensing elements may improve the resolution and/or increase the volume that can be detected.

The inductive sensor may comprise at least one driven primary excitation coil and a secondary, passive, excitation coil excited by the primary inductive coil. This enables the volume that can be detected to be increased without additional electronics or physical connections.

In one example, the coil or coils of the inductive sensor may be embedded within a sleeve for mounting around the baby bottle. Thus, the system may be used with a standard feeding bottle.

In another example, the coil or coils of the inductive sensor may be embedded in a wall of the feeding bottle and the sensing circuit is within a sleeve for mounting around the baby bottle.

This reduces the constraints on the sleeve design. The coil and sensing circuit can be coupled through the air (i.e. non-galvanic) using a coil transformer in the sleeve.

The invention also provides a feeding bottle system, comprising:
a feeding bottle; and
a monitoring system as defined above for monitoring the milk quantity in the feeding bottle during feeding.

The monitoring may be carried out in real time during feeding. A feeding rate may be obtained based on volume measurements over time.

The invention also provides a milk expression system, comprising
a breast pump for expressing milk into a feeding bottle; and
a monitoring system as defined above for monitoring the milk quantity in the feeding bottle during expression.

The system may be used as part of a milk expression system in order to personalize and automatically optimize vacuum pressure profiles for more comfort and efficiency during expression. The inductive sensing may for example be used in combination with the breast pump to detect the onset of milk flow or the milk ejection reflex (MER). The inductive sensor can be made very sensitive to small volumes of milk, enabling, e.g., the application of first-drop detection.

The invention also provides a method of determining a milk volume within a feeding bottle, comprising:
detecting inductance properties of milk in the feeding bottle using a coil for generating a magnetic field and a sensing circuit; and
determining a milk volume within the feeding bottle based on the inductance properties.

The invention also provides a computer program comprising computer program code means which is adapted, when said program is run on a computer, to implement the method above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1A shows a feeding bottle mounted in a sleeve which functions as a monitoring system;
Figure 1B shows an alternative with the coil mounted in a base on which the bottle is mounted;
Figure 1C shows an alternative in which the coil is formed as part of the feeding bottle, embedded in the side wall of the bottle;
Figure ID shows an alternative in which there are separate excitation and sensing coils at different heights up the bottle;
Figure IE shows an alternative in which there are separate excitation and sensing coils at different sides of the bottle;
Figure 2 shows the electrical components of the system;
Figure 3 shows a frequency measurement for different milk volumes for the designs of Figures 1A to 1C;
Figure 4 shows a damping measurement for different milk volumes for the designs of Figures 1A to 1C;
Figure 5 shows an amplitude measurement for different milk volumes for the sensing coil in the design of Figure 1D;
Figure 6 shows a phase measurement for different milk volumes for the sensing coil in the design of Figure 1D;
Figure 7 shows an amplitude measurement for different milk volumes for the sensing coil in the design of Figure IE;
Figure 8 shows a phase measurement for different milk volumes for the sensing coil in the design of Figure IE;
Figures 9A to 9D show some possible coil geometries; and
Figure 10 shows an electric breast pump which may make use of the bottle of Figures 1 and 2.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a monitoring system for a feeding bottle, in particular a feeding bottle for feeding milk to a baby. An inductive sensor is used to detecting inductance properties of the milk. A milk volume is derived based on these inductance properties.

The inductive sensing may make use of an excitation coil or coil arrangement, wherein the drive circuit for the excitation coil or coil arrangement detects changes in local inductance properties. Thus, the excitation coil or coil arrangement functions both as an excitation energy source and as a sensor. Alternatively, there may be an excitation coil or coil arrangement and a separate sensing coil or coil arrangement, and the sensing is based on the inductance properties between the excitation and sensing sides, which influences the electromagnetic coupling between the excitation and sensing sides.

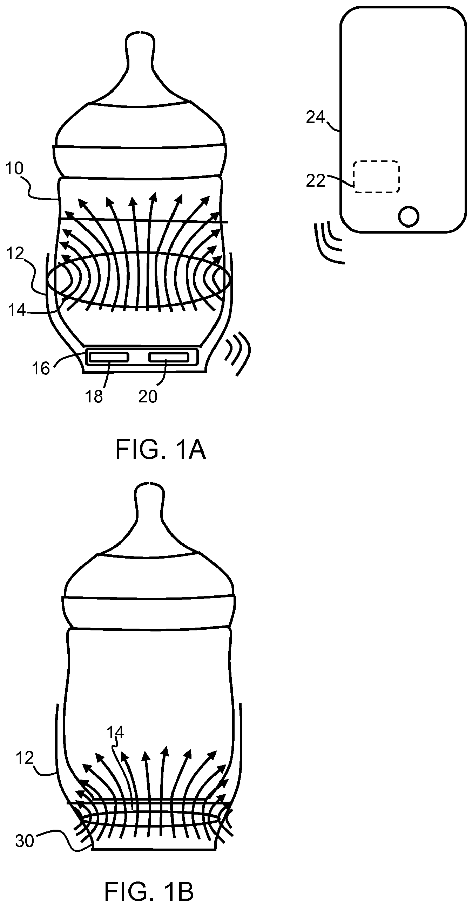

Figure 1A shows a feeding bottle 10 mounted in a sleeve 12 which functions as a monitoring system. The sleeve 12 has embedded within an inductive sensor coil 14 which surrounds the feeding bottle 10. The coil 14 may comprise a single turn coil or a coil with multiple turns. An inductive sensor is formed by the sensor coil 14 and a control circuit 16. The control circuit has a driving circuit 18 for driving the coil and a sensing circuit 20. The control circuit 16 is shown forming a base part of the sleeve, but it may be incorporated anywhere in or on the sleeve.

The base part for example includes a battery, means for providing visual feedback to the user via LEDs, and means for communicating the results wirelessly to a smartphone or tablet as shown.

The inductive sensor is for detecting inductance properties of the material proximal to the sensor, namely the milk in the feeding bottle. The coil 14 generates a magnetic field in the internal volume of the feeding bottle under the control of the driving circuit 18, and the sensing circuit 20 is for sensing the effect of the milk on that generated field, and thereby to determine inductance properties of the milk.

A processor 22 determines a milk volume within the feeding bottle based on the inductance properties.

In the example shown, the processor 22 is the processor of a mobile phone 24 which communicates wirelessly with the control circuit 16. Thus, the sleeve locally generates the magnetic field and detects the inductance properties, and the remote processor converts the inductance properties into milk quantity information. Thus, a parent feeding a baby may monitor on their mobile phone how the feeding of the baby is progressing.

The inductive sensing does not rely on gravity, so it can be used to perform milk volume measurements on non-flat surfaces and for moving volumes, at all angles, and even in the air.

The milk volume information may be converted into milk flow rates based on sequential volume measurements over time. This information may then be used to determine when the baby has finished drinking to prevent overfeeding.

The sensor coil 14 may be embedded in plastic and does not require physical contact with the milk.

The drive circuit 18 for example comprises a resonator circuit, which for example includes the coil 14 and a resonance capacitor. The sensing circuit 20 is for detecting changes in the resonance characteristics. In particular, the coil generates a primary alternating magnetic field and this leads to the induction of eddy (secondary) currents and a consequent secondary magnetic field in material within the primary magnetic field. The secondary currents counteract the generating source, leading to an effective change in the encountered impedance at the primary side by the drive circuit.

The drive circuit 18 for example comprises an oscillator circuit, and the effect of the secondary magnetic field is to cause changes in the oscillation characteristics, such as the oscillator frequency and damping, which can be used to derive (changes in) the inductive properties of the material around the primary coil. In this way, the inductive sensor can sense the amount of milk within the primary magnetic field. More milk for example translates into a larger secondary magnetic field, leading to a larger frequency shift and more damping.

The frequency and damping characteristics are measured, and related to the volume of the liquid present in the magnetic field of the resonator.

The oscillator circuit may be a free running oscillator. However, other oscillator implementations are also possible to detect changes of resonator properties. For the case of a Phase Locked Loop (PLL), the control signals of the PLL are measured.

The oscillator for example has a resonance frequency in the MHz range, for example between 1MHz and 100MHz. The sensing is based on measuring disturbances to this high frequency magnetic field.

Inductive flow rate sensing is known. In this technique, a slowly varying applied magnetic field (with operating frequency typically below 100 Hz) induces a flow dependent voltage in the liquid. That voltage is picked up by separate electrodes and is translated to a flow measurement. The induced voltage is caused by the magnetic induction of the magnetic field to the ions in the liquid. This is dependent on the ion concentration of the fluid.

The inductive sensing used described above is not based on the measurement of an induced voltage of the magnetic field. Instead, a much higher frequently magnetic field is applied (with order of magnitude MHz) and the disturbances of this magnetic field are monitored over time. This is a volume measurement and from the variation of volume, a flow of milk can be deduced.

The inductive sensing approach used is described in further detail in WO 2018/127524, in which the excitation signal of an antenna is modulated by the movement of air, fluid or tissue in a body, and this is used as part of a stethoscope.

The invention instead uses this inductive sensing approach to make use of modulation of the coil (i.e. antenna) excitation signal to determine a liquid volume.

In a first implementation, the coil (functioning as an antenna) can be used to receive an electromagnetic signal at a resonance frequency of the coil and the modulated electromagnetic signal is a measurement of the return loss of the antenna. The processing unit is then configured to measure changes in frequency and amplitude of the modulated electromagnetic signal.

In a second implementation, a phase locked loop (PLL) is used to generate the excitation signal for the coil, and the control signal for the PLL provides the output signal representing the fluid volume. A reference oscillator for example outputs an analog tuning control signal to a voltage-controlled oscillator (VCO). The tuning control signal is a result of a comparison of the signal from the reference oscillator to the signal from the VCO. In response to the PLL analog control signal the VCO generates an excitation signal at a required frequency and provides this to the coil so that the coil emits the excitation electromagnetic signal. The excitation electromagnetic signal then induces eddy currents in the body of the subject, and these eddy currents will induce a current in the coil.

The liquid (milk) being sensed effectively detunes the antenna formed by the coil, and the digital control signal counters this detuning and corrects the phase of the VCO. Thus, the control signal provides the volume information.

Figure 1A shows the coil implemented in a sleeve mounted around the bottle. Figure 1B shows an alternative with the coil mounted in a base 30 of the sleeve 12, on which the bottle rests.

The coil could instead be positioned vertically against the bottle. This could have benefits in certain applications, for example where the first drops of breast milk are to be detected while expressing milk using a breast pump, to (automatically) optimize the vacuum pressure profiles for more comfort and efficiency. In that case, the bottle is for example attached to the breast, hanging under an angle, and the first drops may not hit the bottom, but the lower side of the bottle. The use of the feeding bottle as part of a breast pump system is described below.

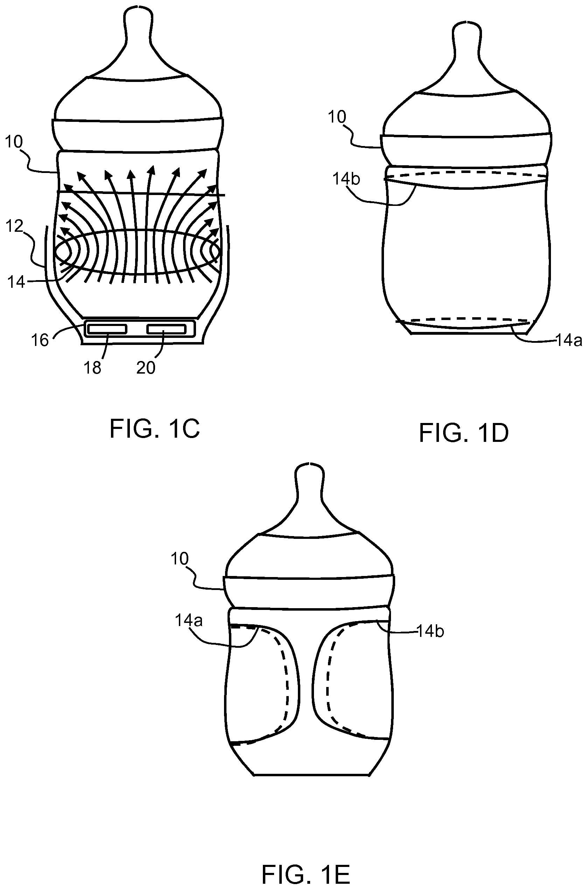

In Figure 1A, the coil is embedded in the sleeve. Figure 1C shows an example in which the coil is formed as part of the feeding bottle, embedded in the side wall of the bottle. The sleeve 12 then contains the control circuit. Wired connection to the coil 14 is not needed, and the embedded coil is driven by a further coil in the sleeve, thereby forming a transformer structure, with coils in the sleeve (not shown) and in the bottle wall (shown). The coil in the sleeve guides the magnetic field generated by the embedded first coil.

Figures 1A to 1C show examples with a single coil which is both for the generation of the primary electromagnetic field and the analysis of the resonance characteristics. It is also possible to have separate excitation and sensing coils as mentioned above.

Figure ID shows an example with a lower excitation coil 14a and an upper sensing coil 14b and The coils may be integrated into the bottle wall or provided in a sleeve, as explained above.

The excitation coil 14a for example transmits with a high radio frequency (e.g. in the range 10MHz to 1GHz, such as 550 MHz). The phase and amplitude of the received signal at the sensing coil 14b changes as function of the milk volume present in the bottle. Hence, by measuring the phase and/or amplitude in the received signal, the milk volume can be estimated.

Figures 1A to ID show examples with coils which generally extend in a plane perpendicular to the up-down (vertical) axis of the bottle. An alternative is for the coil to be mounted in a generally vertical direction, against the side of the bottle. In such a case, the coil is no longer planar as it follows the contour of the bottle.

Figure IE shows another example with two coils; an excitation coil 14a and a sensing coil 14b, mounted on the sides of the bottle. The excitation coil 14a again is for transmitting a fixed high frequency signal such as 550MHz. The phase and amplitude of the received signal changes as a function of the milk volume present in the bottle.

Note that this vertical (bottle side) coil arrangement may also be used in the examples of Figures 1A to 1C.

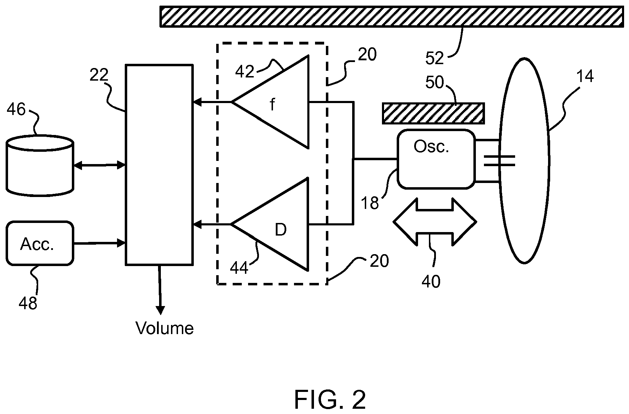

Figure 2 shows the electrical components of the system based on a single coil arrangement functioning as both the excitation coil and the sensing coil, i.e. for the examples of Figures 1A to 1C. The phase and/or amplitude measurement in the received signal at the sensing coil for the examples of Figures 1D and 1E may be made by conventional circuitry, not shown.

In Figure 2 (for the arrangements of Figures 1A to 1C), the drive circuit 18 comprises an oscillator, such as a free running oscillator, for driving the coil 14 to generate the primary magnetic field. The interaction with the secondary magnetic field (as represented by arrow 40) induces changes in the resonance characteristics. The sensing circuit 20 has a first unit 42 for measuring frequency and a second unit 44 for measuring damping.

This information is provided to the processor 22 which then derives the milk volume information. For this purpose, the processor 22 has access to a memory 46, which stores calibration functions or tables relating the measured resonance characteristics to the milk volume in the bottle.

Figure 2 also shows an optional accelerometer 48, for example at or in the bottle sleeve, to account for the angle-dependent milk distribution in the bottle. This is useful, for example, when a single coil is placed around the bottle half way up the height of the bottle. The inductive sensor will then measure a different signal when the feeding bottle is held upright compared to when it is upside-down, and there is also milk in the nipple of the bottle.

The memory can then store calibration functions or tables relating the measured resonance characteristics to the milk volume, further taking into account the orientation of the bottle.

Shields may be implemented to minimize the capacitive coupling to the sensed milk volume and for suppressing the coupling to external objects, such as the hand holding the bottle or the breast of the mother. Figure 2 schematically shows a first shield 50 associated with the drive circuit 18 and a second shield 52 against interference from nearby objects.

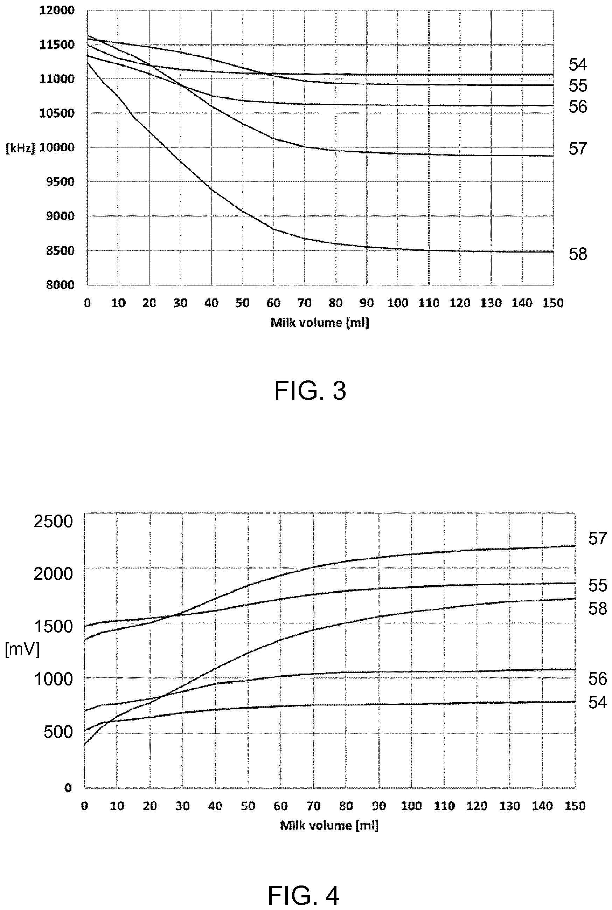

Figure 3 shows an example of frequency shift (kHz) versus milk volume for an upright bottle. This relationship may be used to derive a function or table which may be stored in the memory 46, relating the frequency shift to the volume.

Plot 54 is for a lower coil, plot 55 is for a top coil, plot 56 is for a middle coil, plot 57 is for the middle coil and top coil in parallel and plot 58 is for the three coils in parallel.

The frequency shift reduces with increasing volume, i.e. the frequency becomes closer to the drive frequency for a fuller milk bottle.

Figure 4 shows an example of a level of damping versus milk volume for an upright bottle. The damping shown is the signal reduction in amplitude in mV, from an original amplitude of 3V. This relationship may again be used to derive a function or table which may be stored in the memory 46, relating the damping current to the volume.

Plot 54 is again for a lower coil, plot 55 is for a top coil, plot 56 is for a middle coil, plot 57 is for the middle coil and top coil in parallel and plot 58 is for the three coils in parallel.

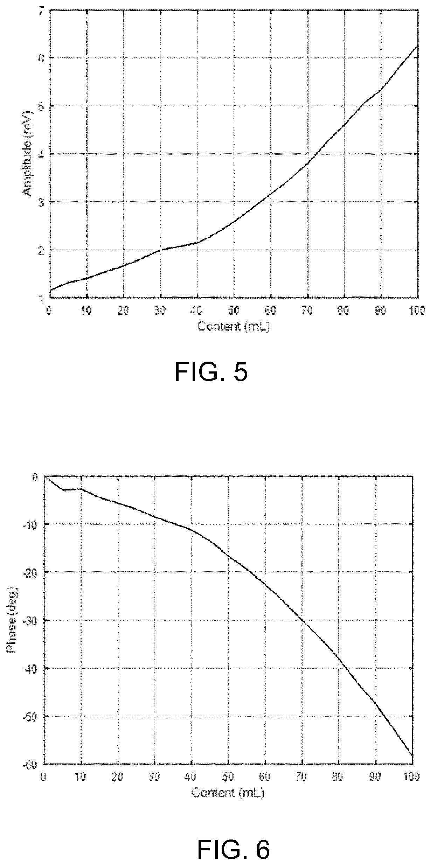

Figure 5 shows a plot of signal amplitude at the sensing coil 14b versus the milk volume for the arrangement of Figure 1D and Figure 6 shows a plot of signal phase at the sensing coil 14b versus the milk volume for the arrangement of Figure ID.

The dependency on milk volume can clearly be seen.

The use of separate excitation and sensing coils has the advantage that the measurements are less affected by the environment. For example, a hand in the proximity of the bottle will not influence the frequency, as it is set to a fixed value in the excitation coil.

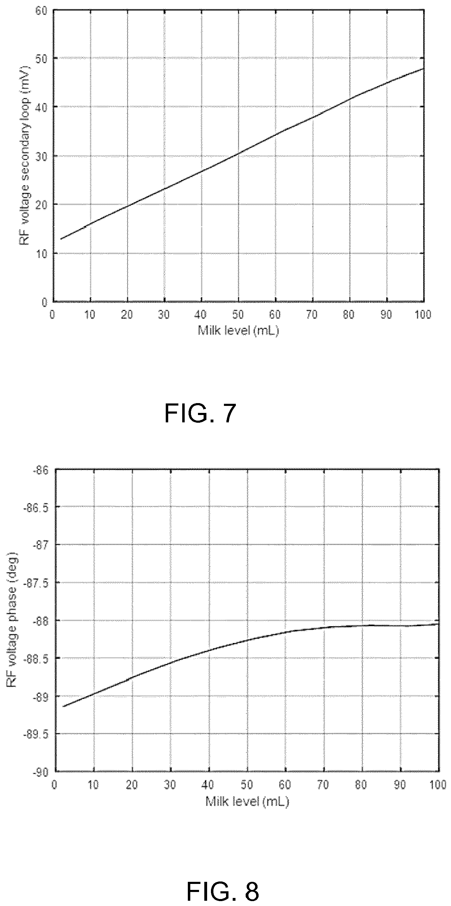

Figure 7 shows a plot of signal amplitude at the sensing coil 14b versus the milk volume for the arrangement of Figure IE and Figure 8 shows a plot of signal phase at the sensing coil 14b versus the milk volume for the arrangement of Figure 1E.

The dependency on milk volume can again clearly be seen.

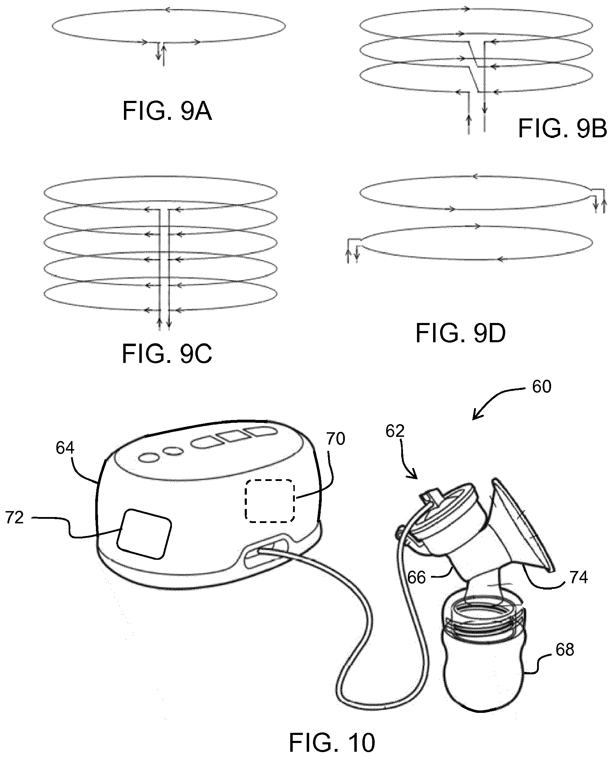

There are various options of the design of the coil or coils used in any of the examples above. Figure 9 shows some possible coil geometries. Figure 9A shows a single turn single coil. Figure 9B shows a single coil with multiple turns. Figure 9C shows a set of single turns in parallel and distributed spatially (e.g. up the height of the feeding bottle). Figure 9D shows two separate single turn coils.

When separate coils are used for the excitation coil and/or the sensing coil, as in Figure 9D, multiple inductive sensors may be used, for example with one around the feeding bottle and one underneath the feeding bottle, or multiple sensors around the bottle at different heights. This can be used to improve the volume measurement resolution. The measurement accuracy with two coils at different heights will for example be higher than with a single coil when there is use in different orientations (e.g., when bottle is held upright and held upside-down). This may also be used to increase the probing volume (e.g., for larger bottles).

The particular coil design can also be used to improve the linearity of the detection characteristic.

For example, the response of Figure 3 is related to the most fundamental single turn single coil implementation. Introducing multiple turns over the length of the bottle or splitting up the single turn into several parallel single turn coils or a combination of both, can lead to significant improvement of the detection characteristic, giving improved resolution over the full measurement range.

The use of two or more coils (or excitation-sensing coil pairs) such that the magnetic fields, when combined, cover the full bottle and bottle nipple volume means that an accelerometer may not be needed to make the measurement angle-independent. For example, when one coil is placed underneath the bottle and one coil is placed in the ring of the cap on top of the bottle, and the bottle is half-full, then when held upright, most of the signal will come from the coil underneath the bottle. Turning the bottle around, the milk will move away from the coil underneath (lowering the corresponding signal), towards the upper coil (increasing the corresponding signal). The memory can again store calibration functions or tables relating the measured inductive sensing signals from both coils combined to the milk volume in the bottle.

Optionally, a passive excitation coil (i.e., without an energy supply and electronics) can be placed at a distance from the primary excitation coil, that is within the primary magnetic field. For example a passive coil may be placed at the top of the bottle, in the ring of the cap. This passive coil is then excited by the primary magnetic field and thereby extends the measurement volume into the upper part of the feeding bottle and improves the measurement resolution overall. This may especially be beneficial when holding the bottle upside-down, with a large part of the milk volume being in the nipple of the bottle, further away from the bottle sleeve.

As mentioned above, the invention may be used during feeding, to monitor the amount of milk which has been drunk and/or the drinking rate. It may also be used as part of a milk expression system.

Figure 10 shows an electric breast pump 60 comprising an expression kit 62 and a vacuum unit 64 for generating a pressure cycle during which vacuum is alternatingly created and released. The expression kit 62 comprises a functional expression body 66 and a milk receptacle 68 that is connectable to the expression body 66, e.g. by screwing, thereby closing a lower end of the expression body 20.

The vacuum unit 64 comprises an electric pump and an air valve for realizing the vacuum cycle as mentioned above during operation, i.e. during pumping sessions to be performed by means of the breast pump device. A controller 70 provides proper operation of the pump arrangement.

The vacuum unit 64 has a user interface 72 for allowing a user of the vacuum unit 64 to influence operational parameters such as suction force, pumping frequency, and variation of the suction force over time. In general, the user interface 72 may be realized in any suitable manner such as through a number of buttons or through a touch screen, for example.

The expression body 66 comprises a breast-receiving funnel 74 such as a massage cushion for providing a soft and warm feel to the breast and/or imitating a baby's sucking action.

The milk receptacle 68 may comprise the feeding bottle as described above. One particular benefit is to detect the first drops of expressed milk. This information may then be used to optimize the vacuum pressure profiles.

A milk expression session starts with the breast pump in stimulation mode i.e., the frequency is higher than in an expression mode and the vacuum level is lower (i.e. lower suction). Upon detection of the MER (Milk Ejection Reflex) the device will switch to the expression mode with a lower frequency and increased vacuum, to enable the expression process. This switch is typically either time based i.e., it is expected that after a certain amount of time the MER has occurred, or by hand i.e. the woman herself has to detect the MER and switch the pump to expression mode. The approach above enables automatic detection of the MER

In the example above, some processing takes place in the remote device via an app. Of course, the system may instead be fully integrated into the sleeve. Alternatively, some processing may performed even more remotely - for example the mobile telephone may send data to an external host for processing, and the results are then returned.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A monitoring system for a feeding bottle, comprising:
an inductive sensor for detecting inductance properties of the material proximal to the sensor, the inductive sensor comprising an excitation coil (14) for generating a magnetic field in the internal volume of the feeding bottle and a sensing circuit (20); and
a processor (22) adapted to determine a milk volume within the feeding bottle based on the inductance properties.

2. A system as claimed in claim 1, wherein the inductive sensor comprises a resonator circuit (18), which includes the excitation coil (14), and wherein the sensing circuit is for detecting changes in the resonance characteristics.

3. A system as claimed in claim 2, wherein the change in resonance characteristics comprises a change in resonant frequency.

4. A system as claimed in claim 2 or 3, wherein the change in resonance characteristics comprises a change in resonance damping.

5. A system as claimed in any one of claims 2 to 4, comprising a memory (46), accessible by the processor (22), which stores a function or a look up table, for converting between the resonance characteristics and the milk volume.

6. A system as claimed in claim 1, wherein the inductive sensor further comprises a sensing coil separate to the excitation coil.

7. A system as claimed in any one of claims 1 to 6, further comprising a shield (52) between the excitation coil of the inductive sensor and an outer surface of the system.

8. A system as claimed in any one of claims 1 to 7, further comprising an accelerometer (48) for measuring the feeding bottle angle, wherein the processor is adapted to compensate for the angle-dependent milk distribution in the bottle.

9. A system as claimed in any one of claims 1 to 8, wherein the inductive sensor comprises a plurality of inductive sensing elements.

10. A system as claimed in any one of claims 1 to 9, wherein the inductive sensor comprises at least one driven primary excitation coil and a secondary, passive, excitation coil excited by the primary inductive coil.

11. A system as claimed in any one of claims 1 to 10, wherein:
the coil or coils of the inductive sensor is or are embedded within a sleeve for mounting around the baby bottle; or
the coil or coils of the inductive sensor is or are embedded in a wall of the feeding bottle and the sensing circuit is within a sleeve for mounting around the baby bottle.

12. A feeding bottle system, comprising:
a feeding bottle; and
a monitoring system as claimed in any one of claims 1 to 11 for monitoring the milk quantity in the feeding bottle during feeding.

13. A milk expression system, comprising
a breast pump for expressing milk into a feeding bottle; and
a monitoring system as claimed in any one of claims 1 to 11 for monitoring the milk quantity in the feeding bottle during expression.

14. A method of determining a milk volume within a feeding bottle, comprising:
detecting inductance properties of milk in the feeding bottle using a coil for generating a magnetic field and a sensing circuit; and
determining a milk volume within the feeding bottle based on the inductance properties.

15. A computer program comprising computer program code means which is adapted, when said program is run on a computer, to implement the method claim 14.
